# EUROPEAN PATENT APPLICATION

(11) **EP 4 586 343 A1**
(43) Date of publication of application: **16.07.2025**
(21) Application number: 24863186.3
(22) Date of filing: 04.09.2024
(51) Int. Cl.: H01M 4/62, H01M 4/131, H01M 4/525, H01M 4/505, H01M 10/0562, H01M 10/052, H01M 4/02

(54) **BINDER FOR POSITIVE ELECTRODE OF ALL-SOLID-STATE BATTERY, AND COMPOSITE POSITIVE ELECTRODE AND ALL-SOLID-STATE BATTERY COMPRISING SAME**

(30) Priority: 05.09.2023 KR 20230117967; 30.08.2024 KR 20240117383
(71) Applicant: LG Energy Solution, Ltd., Seoul 07335 (KR); IUCF-HYU (Industry-University Cooperation Foundation Hanyang University), Seoul 04763 (KR)
(72) Inventor: LEE, Daejin, Daejeon 34122 (KR); HAH, Hoejin, Daejeon 34122 (KR); KIM, Dong Won, Seoul 04763 (KR); HONG, Seung Bo, Seoul 04763 (KR); LEE, Young Jun, Seoul 04763 (KR); JANG, Yoo Rim, Seoul 04763 (KR); LEE, Han Jo, Seoul 04763 (KR)
(74) Representative: Goddar, Heinz J.
(86) International application number: PCT/KR2024/013320
(87) International publication number: WO 2025/053606

(57) **Abstract**

The present invention relates to a binder for a positive electrode in an all-solid-state battery, a composite positive electrode comprising the same, and an all-solid-state battery.

## Description

### [Technical Field]

The present invention relates to a binder for a positive electrode in an all-solid-state battery, a composite positive electrode comprising the same, and an all-solid-state battery.

This application claims the benefit of priority to Korean Patent Application No. 10-2023-0117967, filed September 5, 2023, and Korean Patent Application No. 10-2024-0117383, filed August 30, 2024, the disclosures of which are incorporated herein by reference in their entirety.

### [Related Art]

A secondary battery is a device that converts external electrical energy into chemical energy, stores it, and generates electricity when needed. It is also called a rechargeable battery because it can be recharged multiple times. Common secondary batteries include lead-acid batteries, nickel-cadmium batteries (NiCd), nickel-metal hydride batteries (NiMH), and lithium secondary batteries. Secondary batteries offer both economic and environmental benefits over primary batteries, which are used once and discarded.

On the other hand, as wireless communication technology becomes increasingly advanced, the demand for lightweight, thin, and miniaturized portable devices and automotive accessories is increasing, and the demand for secondary batteries as energy sources for these devices is growing. In particular, as hybrid and electric vehicles become more practical in terms of preventing environmental pollution, research is emerging to use secondary batteries in these next-generation automotive batteries to reduce manufacturing costs and weight while extending their lifespan. Among the various secondary batteries, lithium secondary batteries have recently been in the spotlight due to their light weight, high energy density and operating potential, and long cycle life.

Generally, lithium secondary batteries are manufactured by mounting an electrode assembly consisting of a negative electrode, a positive electrode, and a separator inside a cylindrical or angular metal can, or a pouch-like case of aluminum laminated sheet, and injecting an electrolyte into the electrode assembly.

Traditionally, the liquid electrolyte in which lithium salts are dissolved in non-aqueous organic solvents has been used for lithium secondary batteries. However, this liquid electrolyte is not only prone to electrode material degradation and volatilization of organic solvents, but also to combustion or explosion due to the increase in ambient temperature and the temperature of the battery itself, and to leakage, making it difficult to realize various types of highly safe lithium secondary batteries.

On the other hand, all-solid-state batteries utilizing a solid electrolyte have the advantage of eliminating organic solvents, which allows for safe and simple electrode assemblies.

However, in order to manufacture a positive electrode for an all-solid-state battery, a polymeric binder that can effectively bind the positive electrode components is essential, and a widely known polymeric binder includes a nitrile rubber-based binder material. However, the use of nitrile rubber-based binder as a polymeric binder to manufacture an all-solid-state battery has the problem of reducing the interfacial adhesion between the current collector and electrodes and the lifetime of the battery.

Therefore, there is a need to develop a binder for a positive electrode that can improve the mechanical properties of electrode and increase its lifetime retention.

### [Prior Art Reference]

### [Patent Reference]

(Patent Reference 1) Korean Laid-open Patent Publication No. 10-2020-0063467
(Patent Reference 2) Korean Laid-open Patent Publication No. 10-2020-0023308

### [Non-patent Reference]

(Non-patent Reference 1) Journal of the Electrochemical Society, 164, A2075 (2017)
(Non-patent Reference 2) ACS Energy Letters 4, 94 (2018)
(Non-patent Reference 3) Ecomat, 4(4), e12193 (2022)

### [Detailed Description of the Invention]

### [Technical Problem]

In order to solve the above problems, the inventors of the present invention conducted various studies and confirmed that applying a ternary copolymer comprising ethylene-derived repeating units, methylacrylate-derived repeating units, and glycidylmethacrylate-derived repeating units as a binder for positive electrode can improve the adhesion between the current collector and electrode interfaces and the adhesion within the electrode, thereby manufacturing a battery with improved life characteristics.

Accordingly, the present invention aims to provide a binder for positive electrode that improves the adhesion between the current collector and electrode interfaces and the adhesion within the electrode.

It is also an object of the present invention to provide a composite positive electrode comprising a binder for the positive electrode with improved lifetime characteristics, and an all-solid-state battery comprising the same.

### [Technical Solution]

In one aspect of the present invention, a composite positive electrode includes a positive electrode active material, a conductive material, a solid electrolyte, and a polymeric binder, wherein the polymeric binder may be a ternary copolymer comprising ethylene-derived repeating units, methylacrylate-derived repeating units, and glycidylmethacrylate-derived repeating units.

The polymeric binder may comprise a ternary copolymer comprising repeating units represented by Formula 1 below, repeating units represented by Formula 2 below, and repeating units represented by Formula 3 below: 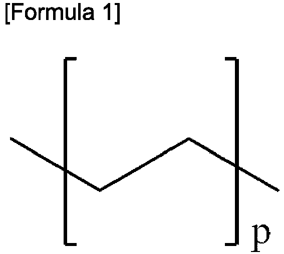 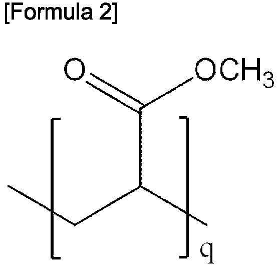 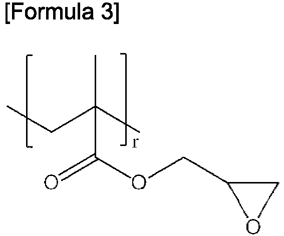 in Formulae 1 to 3,
p, q, and r are the number of moles in the repeat unit, respectively, and
p, q, and r are each independently integers between 1 and 100.

The polymeric binder may be a polymer comprising cross-repeating units represented by Formula 4 below:

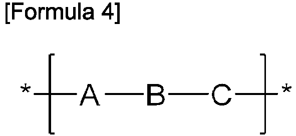

In formula 4, A is the repeating unit represented by Formula 1 above, B is the repeating unit represented by Formula 2 above, and C is the repeating unit represented by Formula 3 above.

In Formula 4, for 1 mole of r, p:q may be in a molar ratio of 30 to 50 : 1 to 5.

In Formula 4, p:q:r can be 40:4:1.

In one aspect of the present invention, the composite positive electrode is provided wherein the content of the polymeric binder is 3% by weight or less based on the total weight of the composite positive electrode.

In one aspect of the present invention, the composite positive electrode is provided wherein the positive electrode active material comprises a lithium transition metal composite oxide, wherein the transition metal comprises at least one of Co, Mn, Ni, and Al.

In one aspect of the present invention, the lithium transition metal complex oxide provides a composite positive electrode comprising at least one of the compounds represented by Formula 5 below:

[Formula 5] LiₓNiₐCo_{b}Mn_{c}M_{z}O_{y}

wherein 0.5≤x≤1.5, 0≤a≤1, 0≤b<1, 0≤c<1, 0≤z<1, 1.5<y<5, wherein a+b+c+z is less than or equal to 1, and M comprises at least one selected from Al.

In one aspect of the present invention, a composite positive electrode is provided, wherein the solid electrolyte is a sulfide-based solid electrolyte.

In one aspect of the present invention, a composite positive electrode is provided, wherein the sulfide-based solid electrolyte comprises at least one selected from the group consisting of LiₐPS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS.

In one aspect of the present invention, there is provided an all-solid-state battery comprising the composite positive electrode, a negative electrode, and a solid electrolyte interposed therebetween.

### [Advantageous Effects]

The present invention provides a ternary copolymer comprising an ethylene-derived repeating unit, a methylacrylate-derived repeating unit, and a glycidylmethacrylate-derived repeating unit as a polymeric binder, which has the effect of increasing the binding strength of the composite positive electrode, improving the adhesion between the current collector and electrode interfaces and the adhesion inside the electrode.

Furthermore, by including the ternary copolymer, it has the effect of improving the life characteristics of the all-solid-state battery.

### [Brief Description of Drawing]

FIG. 1 is a schematic illustration of the process of manufacturing a composite positive electrode for all-solid-state battery.
FIG. 2 is a diagram illustrating X-ray powder diffraction (XRD) patterns of solid electrolyte and a mixture of solid electrolyte and binder according to one example of the present invention.
FIG. 3 is a diagram illustrating a nanoindentation curve of composite positive electrodes according to one example and comparative example of the present invention.
FIG. 4 is a diagram illustrating a SAICAS schematic and measurement results of composite positive electrodes according to one example and comparative example of the present invention.
FIG. 5 is a diagram illustrating a nano-scratch schematic and measurement results of composite positive electrodes according to one example and comparative example of the present invention.
FIG. 6 is a diagram illustrating the results of a GITT analysis of composite positive electrodes according to one example of the present invention and a comparative example.
FIG. 7 is a diagram illustrating the ionic conductivity of composite solid electrolytes in accordance with one example and comparative example of the present invention, and an image of a composite solid electrolyte sheet.
FIG. 8 is a diagram illustrating an initial charge-discharge curve of an all-solid-state battery according to one example of the present invention.
FIG. 9 is a diagram illustrating the discharge capacity over a cycle of an all-solid-state battery according to one example of the present invention.
FIG. 10 is a diagram illustrating a first charge-discharge curve of an all-solid-state battery according to one example of the present invention and a comparative example.
FIG. 11 is a diagram illustrating a CV electrochemical stability evaluation curve of a composite solid electrolyte sheet according to one example of the present invention.
FIG. 12 is a diagram illustrating the discharge capacity over a cycle of an all-solid-state battery according to one example of the present invention and a comparative example.
FIG. 13 is a diagram illustrating the discharge capacity in accordance with the current of an all-solid-state battery according to one example and a comparative example of the present invention.
FIG. 14 is an image depicting a cross-section before and after a cycle of a composite positive electrode according to one example and a comparative example of the present invention.

### [Best Mode]

Hereinafter, the invention will be described in more detail.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

The terminology used in the present invention is used to describe certain examples only and is not intended to limit the invention. Expressions in the singular include the plural unless the context clearly indicates otherwise. In the present invention, the terms "comprise" or "have" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

While lithium secondary batteries have been used in small applications such as cell phones and laptops, they have recently expanded into medium and large applications such as electric vehicles and energy storage. In this case, unlike the smaller ones, the operating environment is harsher and more batteries need to be used, so they need to have stability with good performance.

Currently, most commercially available lithium secondary batteries use liquid electrolytes in which lithium salts are dissolved in organic solvents, and the organic solvents contained in the liquid electrolyte are volatile and flammable, posing a potential risk of ignition and explosion, and leakage can occur, resulting in a lack of long-term reliability.

In response, the development of all-solid-state batteries, which replace the liquid electrolyte in lithium secondary batteries with a solid electrolyte, is underway. Since all-solid-state batteries do not contain volatile organic solvents, there is no risk of explosion or fire, and they are gaining traction as a way to manufacture high-powered batteries with excellent economics and productivity.

To realize the high energy density of an all-solid-state battery, it is essential to manufacture a polymeric binder that can effectively bind the positive electrode components. A widely known nitrile rubber-based binder material has been used for the polymeric binder for positive electrode, but there is a problem that the interfacial adhesion between the current collector and the electrode and the lifetime of the battery are reduced.

Therefore, the present invention seeks to provide a binder for positive electrode that can improve the mechanical properties of electrode and increase its lifetime retention.

Hereinafter, the composition and effectiveness of the present invention will be described in detail.

In one embodiment,, a composite positive electrode comprises a positive electrode active material, a conductive material, a solid electrolyte, and a polymeric binder, wherein the polymeric binder comprises a ternary copolymer.

The ternary copolymer may comprise ethylene-derived repeating units, methylacrylate-derived repeating units, and glycidylmethacrylate-derived repeating units.

The ternary copolymer polymer may comprise repeating units represented by Formula 1 below, repeating units represented by Formula 2 below, and repeating units represented by Formula 3 below: 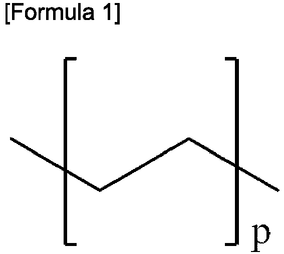 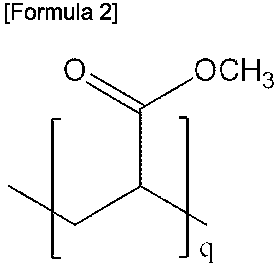 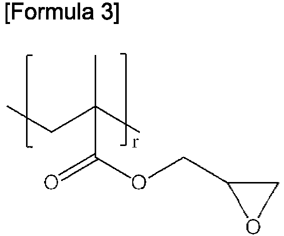 in Formulae 1 to 3,
p, q, and r are the number of moles in the repeat unit, respectively, and
p, q, and r are each independently integers between 1 and 100.

The ternary copolymer may be a polymer comprising cross-repeating units represented by Formula 4 below:

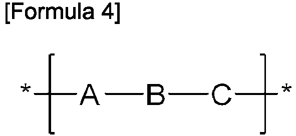

In formula 4, A is the repeating unit represented by Formula 1 above, B is the repeating unit represented by Formula 2 above, and C is the repeating unit represented by Formula 3 above.

In Formula 4, for 1 mole of r, p:q may be in a molar ratio of 30 to 50 : 1 to 5. For example, the molar ratio of p, q and r may be 30:5:1, 40:5:1, 50:5:1, 30:4:1, 40:4:1, 50:4:1, 30:3:1, 40:3:1, 50:3:1, 30:2:1, 40:2:1, 50:2:1, 30:1:1, 40:1:1, 50:1:1, but are not limited thereto.

For 1 mole of r, as the molar ratio of p decreases relative to the molar ratio of q, the flexibility imparted to the polymeric binder decreases, thereby reducing the resistance of the positive electrode active material to volume fluctuations. This causes a reduction in capacity retention rate in the cycle life evaluation, which in turn reduces the formation cycle discharge capacity.

For 1 mole of r, there is a problem that as the molar ratio of r increases relative to the molar ratio of q, the relative molar ratio of q decreases, resulting in a decrease in binding force. This means that the binding capacity is reduced, resulting in a decrease in the formation cycle discharge capacity, which in turn reduces the cycle capacity retention rate.

For 1 mole of r, when the molar ratio of p is less than 30 based on a ratio of 1 to 5 moles of q, the flexibility imparted to the polymeric binder is reduced, resulting in brittle problems in electrode fabrication. In addition, when the molar ratio of p is less than 10 based on the 1 to 5 molar ratio of q, the polarity of the polymer itself increases due to the relative increase in the molar ratio of q, and there is a problem that it is insoluble in low polar solvents when manufacturing electrodes. The low polar solvent may be butyl butyrate.

For 1 mole of r, when the molar ratio of p is greater than 50 based on 1 to 5 molar ratio of q, the binding force imparted to the polymeric binder is reduced, resulting in delamination between the current collector and positive electrode composite.

Preferably, for 1 mole of r, the molar ratio of p is 30 to 50 based on 1 to 5 molar ratio of q. More preferably, for 1 mole of the r, p:q may be in a molar ratio of 40:4.

In the molar ratio of p, q and r, when the molar ratio of q is more than 5 based on the 30 to 50 molar ratio of p, the polarity of the polymer itself increases due to the relative increase in the molar ratio of q, and there is a problem that it is insoluble in low polar solvents when manufacturing electrodes. The low polar solvent may be butyl butyrate.

In the ratio of p, q and r, when r is 0, there is a decrease in the flexibility imparted to the polymeric binder and a decrease in the binding force, which causes difficulties in the manufacture of the battery.

In one embodiment, the composite positive electrode comprises a content of polymeric binder of 3% by weight or less based on the total weight of the composite positive electrode. When the content of the polymeric binder exceeds 3% by weight based on the total weight of the composite positive electrode, the binding capacity is improved, but the content of the solid electrolyte that acts as a travel path for lithium ion migration in the composite positive electrode is reduced, which limits the smooth migration of lithium ions in the electrode and increases the resistance. In other words, when the content of the polymeric binder exceeds 3% by weight based on the total weight of the composite positive electrode, the lithium ions cannot move smoothly within the electrode, resulting in a continuous decrease in charge and discharge capacity.

Specifically, the content of the polymeric binder may be 3.0% by weight or less, 2.5% by weight or less, 2.0% by weight or less, 0.5% by weight or more, 1.0% by weight or more, 1.5% by weight or more, based on the total weight of the composite positive electrode.

In one embodiment, the solid electrolyte may comprise a sulfide-based solid electrolyte. The sulfide-based solid electrolyte may include a solid electrolyte containing sulfur (S) and having an ionic conductivity of a metal belonging to Group 1 or 2 of the periodic table.

The sulfide-based solid electrolyte may comprise at least one selected from the group consisting of LiₐPS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, but is not limited thereto.

In one embodiment, the average particle diameter of the sulfide-based solid electrolyte can be adjusted to a range suitable for an all-solid-state battery. In a specific example of the present invention, the solid electrolyte may have an average particle diameter of 0.1 µm to 10 µm. More specifically, the solid electrolyte has an average particle diameter of 0.1 µm or more, 0.5 µm or more, 1.0 µm or more, 1.5 µm or more, 2.0 µm or more, 2.5 µm or more, 3.0 µm or more, 3.5 µm or more, 4.0 µm or more, 4.5 µm or more, 5.0 µm or more, 10 µm or less, 9.5 µm or less, 9.0 µm or less, 8.5 µm or less, 8.0 µm or less, 7.5 µm or less, 7.0 µm or less, 6.5 µm or less, 6.0 µm or less, 5.5 µm or less, 5.0 µm or less, but is not limited thereto.

Furthermore, In one embodiment, the selected solid electrolyte has an ionic conductivity of at least 1x10⁻⁵ S/cm, preferably at least 1x10⁻³ S/cm.

In one embodiment, the solid electrolyte layer may be prepared by, for example, the following methods.

First, the solid electrolyte is prepared. The solid electrolyte may be prepared by obtaining commercially available products or by preparing the solid electrolyte by any of the following methods. Solid electrolyte can be prepared in the following ways.

First, LiCl, Li₂S and P₂S₅ are mixed in stoichiometric amounts and milled, e.g., in a planetary ball mill, to obtain a homogeneous mixture. This mixture can be subjected to high temperature heat treatment for a predetermined period of time to obtain the desired Li₆PS₅Cl solid electrolyte. The heat treatment may be performed at about 550°C, and the heat treatment time may be about 8 hours.

Next, the solid electrolyte material is added and dispersed in a predetermined organic solvent to prepare a slurry. Then, the slurry is applied to a current collector plate or the like, dried, and molded into a sheet shape. If necessary, the resulting sheet-shaped product can be pressurized to obtain a solid electrolyte layer.

In one embodiment, the positive electrode active material may include a mixture of one or two or more of lithium cobalt oxide (LiCoO₂), lithium nickel oxide (LiNiO₂), lithium manganese oxide such as Li₁₊ₓMn₂₋ₓO₄ (wherein x is 0 to 0.33, e.g., LiMn₂O₄), LiMnO₃, LiMn₂O₃, and LiMnO₂, lithium copper oxide (Li₂CuO₂); vanadium oxides such as LiV₃O₈, LiV₂O₄, V₂O₅, or Cu₂V₂O₇; Ni-site lithium nickel oxide represented by LiNi₁ₓMₓO₂ (wherein M is Co, Mn, Al, Cu, Fe, Mg, B or Ga, and 0<x<1), e.g., LiNi_{1-z}(Co, Mn, Al)_{z}O₂ (wherein 0<z<1); lithium-manganese complex oxides represented by LiMn₂₋ₓMₓO₄ (wherein M is Co, Ni, Fe, Cr, Zn or Ta, and x is 0.01 to 1, e.g., LiMn_{1.5}Ni_{0.5}O₄) or Li₂Mn₃MO₈ (wherein M is Fe, Co, Ni, Cu or Zn); LiMn₂O₄ in which a portion of the Li in the formula is substituted by alkaline earth metal ions; disulfide compounds; or Fe₂(MoO₄)₃, and lithium iron phosphate (LiFePO₄). In one example of the present invention, in the lithium iron phosphate, all or at least a portion of the surface of the active material particles may be coated with the carbon material to improve conductivity.

Preferably, the positive electrode active material may include at least one selected from the group consisting of lithium nickel cobalt manganese oxide (e.g., Li(Ni,Co,Mn)O₂, LiNi_{1-z}(Co,Mn,Al)_{z}O₂ (wherein 0<z<1)), lithium iron phosphate (e.g., LiFePO₄/C), lithium nickel manganese spinel (e.g., LiNi_{0.5}Mn_{1.5}O₄), lithium nickel cobalt aluminum oxide (e.g., Li(Ni,Co,Al)O₂), lithium manganese oxide (e.g., LiMn₂O₄), and lithium cobalt oxide (e.g., LiCoO₂).

In one embodiment, most preferably, the positive electrode active material comprises a lithium transition metal complex oxide, wherein the transition metal may comprise at least one of Co, Mn, Ni and Al.

In one embodiment, the lithium transition metal complex oxide may comprise at least one of the compounds represented by Formula 5 below.

<Formula 5> LiₓNiₐCo_{b}Mn_{c}M_{z}O_{y}

wherein 0.5≤x≤1.5, 0≤a≤1, 0≤b<1, 0≤c<1, 0≤z<1, and 1.5<y<5, wherein a+b+c+z is 1 or less, and M comprises at least one selected from Al.

In one embodiment, the positive electrode conductive material may be any one or a mixture of two or more conductive materials selected from the group consisting of, for example, graphite, carbon black, carbon fiber or metal fiber, metal powder, conductive whisker, conductive metal oxide, activated carbon, and polyphenylene derivatives. More specifically, it may be one or a mixture of two or more of the conductive materials selected from the group consisting of natural graphite, artificial graphite, super-p, acetylene black, ketjen black, channel black, furnace black, lamp black, summer black, denka black, aluminum powder, nickel powder, zinc oxide, potassium titanate, and titanium oxide.

The current collector is not particularly limited as long as it has a high conductivity without causing chemical changes in the battery, for example, stainless steel, copper, aluminum, nickel, titanium, calcined carbon, or aluminum or stainless steel whose surface is treated with carbon, nickel, titanium, or silver can be used.

In one embodiment, the solid electrolyte included in the positive electrode may comprise at least one selected from a polymer-based solid electrolyte, an oxide-based solid electrolyte, and a sulfide-based solid electrolyte. In one example of the present invention, the positive electrode active material may preferably comprise a sulfide-based solid electrolyte as described above for the solid electrolyte.

In one embodiment, in the positive electrode, the positive electrode active material is preferably comprised in an amount of at least 70% by weight relative to 100% by weight of the positive electrode active material layer. Furthermore, in the positive electrode, the solid electrolyte is preferably included in an amount of 10% by weight to 30% by weight relative to 100% by weight of the positive electrode active material layer.

In one embodiment, the positive electrode may have a loading amount (per electrode area) of 5 mAh/cm² or more, 6 mAh/cm² or more, or 10 mAh/cm² or more.

In one embodiment, the battery can be operated at an electrochemically stable level even when such a highly loaded positive electrode is applied.

In one embodiment, the positive electrode active material layer can be obtained by casting a slurry prepared by adding positive electrode active material, conductive material, binder resin and solid electrolyte to a suitable solvent.

### [Mode for Practicing the Invention]

The present invention will now be further described with reference to the following examples, but the following examples are intended to illustrate the invention and are not intended to limit the scope of the invention. The examples of the present invention are provided to more fully illustrate the invention to one of ordinary skill in the art.

### Manufacturing Example 1: Manufacturing EMG ternary copolymeric binder

The polymeric binder according to the present invention was prepared by preparing a ternary copolymer (hereinafter, referred to as "EMG ternary copolymer") comprising an ethylene-derived repeating unit, an ethyl methacrylate-derived repeating unit, and a glycidyl methacrylate-derived repeating unit.

For the initiation of the nickel enolate catalyst-based reaction during polymerization, a trifluoromethane ligand precursor (SigmaAldrich) and Ni(COD)₂ (wherein COD is 1,5-cyclooctadiene) (SigmaAldrich) were pre-mixed in 30 ml of toluene solvent for 15 minutes to prepare 0.02% by weight of nickel enolate catalyst solution was prepared. Then, (C) glycidyl methacrylate (SigmaAldrich) was dissolved in toluene solvent at 1.6 M, (B) ethyl methacrylate (TCI catalyst) and (C) glycidyl methacrylate (SigmaAldrich catalyst) were dissolved in toluene solvent at a molar ratio of 4:1, respectively, and then the nickel enolate catalyst solution prepared above and the co-catalyst of methylaluminoxane (SigmaAldrich) were added. The EMG ternary copolymer was then prepared by injecting (A) ethylene groups in the polymer at a molar ratio of 40:1 with (C) glycidyl methacrylate (SigmaAldrich) under the control of the flow rate of ethylene gas. The reaction was terminated by adding methanol to the reactor.

In order to increase the yield by sufficient activation of the catalyst, the polymerization reaction was maintained at 55°C by means of a water flow for temperature control between the inner jacket and the outer jacket of the Buchi autoclave (Buchiglas), and the internal pressure was maintained at about 4 atmospheres while ethylene gas was supplied.

### Manufacturing Example 2

The EMG ternary copolymer was prepared in the same manner as in Manufacturing Example 1, except that the molar ratio of the ethylene group (A), ethyl methacrylate (B), and glycidyl methacrylate (C) was 30:4:1.

### Manufacturing Example 3

The EMG ternary copolymer was prepared in the same manner as in Manufacturing Example 1, except that the molar ratio of the ethylene group (A), ethyl methacrylate (B), and glycidyl methacrylate (C) was 50:4:1.

### Comparative Example 1

The EMG ternary copolymer was prepared in the same manner as in Manufacturing Example 1, except that the molar ratio of the ethylene group (A), ethyl methacrylate (B), and glycidyl methacrylate (C) was 10:4:1.

### Comparative Example 2

The EMG ternary copolymer was prepared in the same manner as in Manufacturing Example 1, except that the molar ratio of the ethylene group (A), ethyl methacrylate (B), and glycidyl methacrylate (C) was 60:4:1.

### Comparative Example 3

The EMG ternary copolymer was prepared in the same manner as in Manufacturing Example 1, except that the molar ratio of the ethylene group (A), ethyl methacrylate (B), and glycidyl methacrylate (C) was 5:4:1.

### Comparative Example 4

The EMG ternary copolymer was prepared in the same manner as in Manufacturing Example 1, except that the molar ratio of the ethylene group (A), ethyl methacrylate (B), and glycidyl methacrylate (C) was 40:4:0.

### Comparative Example 5

The EMG ternary copolymer was prepared in the same manner as in Manufacturing Example 1, except that the molar ratio of the ethylene group (A), ethyl methacrylate (B), and glycidyl methacrylate (C) was 40:20:1.

### Comparative Example 6

The EMG ternary copolymer was prepared in the same manner as in Manufacturing Example 1, except that the molar ratio of the ethylene group (A), ethyl methacrylate (B), and glycidyl methacrylate (C) was 20:40:1.

### Experimental Example 1: Comparing electrode fabrication with EMG ternary copolymer binder based on repeating unit molar ratio

In the EMG ternary copolymer according to Manufacturing Example 1, the molar ratio of the ethylene group (A) was significantly reduced in the copolymer according to Comparative Example 1, and the copolymer showed reduced flexibility and brittle behavior during electrode fabrication. When the fabricated electrodes were stimulated to physically fold, the positive electrode composite fragmented and cracked, unlike electrodes with sufficient flexibility. Therefore, when the copolymer according to Comparative Example 1 is included, there are difficulties in manufacturing all-solid-state battery electrodes.

Furthermore, in the EMG ternary copolymer according to Manufacturing Example 1, the molar ratio of the ethylene group (A) was significantly increased in the copolymer according to Comparative Example 2, and the copolymer showed a decreased binding force as a polymeric binder, which caused delamination between the current collector and positive electrode composite. Therefore, when the copolymer according to Comparative Example 2 is included, there are difficulties in manufacturing all-solid-state battery electrodes due to a decrease in binding force.

Furthermore, in the case of the copolymers according to Comparative Examples 3, 5 and 6, due to the increase in the molar ratio of ethyl methacrylate (B) to ethylene groups (A), the polarity of the polymer itself increased, and it was not soluble in butyl butyrate, a low-polarity solvent for electrode preparation, resulting in difficulties in the preparation of all-solid-state battery electrodes.

Furthermore, in the case of the copolymer according to Comparative Example 4, by not including glycidyl methacrylate (C), it was confirmed that when the electrode was pulverized for battery manufacturing, the binding force was reduced due to the peeling off of the composite at the edge of the electrode. It was also found that the composite surface was somewhat rougher, which reduced flexibility. Therefore, when the copolymer according to Comparative Example 4 is included, there is difficulty in manufacturing the electrode of the all-solid-state battery.

Therefore, for the preparation of composite positive electrodes comprising EMG ternary copolymers and all-solid-state batteries comprising same, it was found that it is most appropriate to prepare copolymers with a molar ratio of ethylene groups (A), ethyl methacrylate (B), and glycidyl methacrylate (C) of 30 to 50 : 1 to 5 : 1.

### Experimental Example 2: Comparing electrode fabrication with EMG ternary copolymer binder based on repeating unit molar ratio

In the EMG ternary copolymers according to Manufacturing Examples 1 to 3, the formation cycle discharge capacity and capacity retention of the battery was evaluated in accordance with the molar ratio of ethylene groups (A). The results of the discharge capacity and capacity retention are shown in Table 1 below.

**[Table 1]**

| | **Formation cycle discharge capacity (mAh/g)** | **Cycle Characteristics (0.2 C)** | |
|---|---|---|---|
| | | **Initial capacity (mAh/g)** | **Capacity retention** (%) |
| **Manufacturing Example 1** | 199.1 | 158.9 | 95.6 |
| **Manufacturing Example 2** | 197.1 | 156.0 | 90.3 |
| **Manufacturing Example 3** | 194.8 | 146.2 | 91.4 |

As shown in Table 1, in the EMG ternary copolymer according to Manufacturing Example 1, in the case of the copolymer according to Manufacturing Example 2 with a reduced molar ratio of ethylene groups (A), it is confirmed that the flexibility of the polymeric binder is reduced, resulting in a decreased resistance to volume fluctuations of the active material, which causes a decrease in the capacity retention rate in the cycle life evaluation, and the formation cycle discharge capacity is also reduced compared to Manufacturing Example 1.

Furthermore, in the EMG ternary copolymer according to Manufacturing Example 1, in the case of the copolymer according to Manufacturing Example 3 in which the molar ratio of the ethylene group (A) is increased, due to the relative decrease in the molar ratio of the ethyl methacrylate (B) to the ethylene group (A), the binding force is decreased, the binding capacity is decreased, and the formation cycle discharge capacity is also decreased, and the cycle capacity retention rate is also decreased compared to Manufacturing Example 1.

Therefore, in the manufacture of composite positive electrodes comprising EMG ternary copolymers and all-solid-state batteries comprising same, it was found that the composite positive electrode comprising a copolymer with a molar ratio of ethylene group (A), ethyl methacrylate (B), and glycidyl methacrylate (C) of 40:4:1 improved the mechanical properties of the electrode and had a high life retention rate.

### Example 1: Composite positive electrode with EMG ternary copolymer binder and all-solid-state battery comprising same

LiNi_{0.9}Co_{0.05}Mn_{0.05}O₂, Li₆PS₅Cl (LPSCI) powder (Posco JK solid solution), Super C (Timcal), and EMG ternary copolymer prepared in Manufacturing Example 1 were mixed in butyl butyrate solvent to prepare a slurry. The slurry was mixed with a Thinky Mixer for 15 minutes, and an aluminum current collector was casted with a doctor blade to prepare a composite positive electrode. The weight ratio of positive electrode active material, solid electrolyte, conductive material, and binder in the prepared composite positive electrode is 75 : 21.5 : 1.5 : 2. The prepared composite positive electrode was prepared with a loading of 15 mg/cm² of active material per area.

Li₆PS₅Cl pellet was prepared by placing 100 mg of Li₆PS₅Cl powder into a PET mold and pressurizing it at room temperature at a pressure of 300 MPa, and then the composite positive electrode prepared above was added and pressurized at a pressure of 430 MPa. Li-In foil (Lithium (Honjo), Indium (Nilaco)) was placed on the opposite side of the Li₆PS₅Cl pellet and clamped at a pressure of 60 MPa to produce an all-solid-state battery.

### Example 2

An all-solid-state battery was prepared by the same method as in Example 1, except that the weight ratio of the positive electrode active material, solid electrolyte, conductive material, and binder in the composite positive electrode was 75 : 22.5 : 1.5 : 1.

### Example 3

An all-solid-state battery was prepared by the same method as in Example 1, except that the weight ratio of the positive electrode active material, solid electrolyte, conductive material, and binder in the composite positive electrode was 75 : 20.5 : 1.5 : 3.

### Comparative Example 7:

An all-solid-state battery was prepared by the same method as in Example 1, except that the weight ratio of the positive electrode active material, solid electrolyte, conductive material, and binder in the composite positive electrode was 75 : 19.5 : 1.5 : 4.

### Experimental Example 3: Comparing electrode fabrication based on polymeric binder content

In the all-solid-state batteries according to Examples 1 and 3 and Comparative Example 7, the formation cycle discharge capacity and capacity retention of the battery according to the binder content in the composite positive electrode were evaluated. The results of the discharge capacity and capacity retention are shown in Table 2 below.

**[Table 2]**

| | **Formation cycle discharge capacity (mAh/g)** | **Cycle Characteristics (0.2 C)** | |
|---|---|---|---|
| | | **Initial capacity (mAh/g)** | **Capacity retention (%)** |
| **Example 1** | 199.1 | 158.9 | 95.6 |
| **Example 3** | 194.6 | 153.5 | 90.1 |
| **Comparative Example 7:** | 187.7 | 135.6 | 85.3 |

As shown in Table 2, as the polymeric binder content in the electrode increases, the amount of solid electrolyte acting as a travel path for lithium ion migration decreases, which limits the smooth migration of lithium in the electrode and increases resistance. Therefore, although the binding capacity improves with the content of the binder, the migration of lithium ions within the composite positive electrode is hindered, and the lithium ions do not move smoothly within the electrode, and a continuous decrease in the charging and discharging capacity of the battery was observed.

Thus, it is confirmed that the batteries according to Examples 1 and 3 with a polymeric binder content of 3% by weight or less are superior in cycle discharge capacity and capacity retention to the batteries according to Comparative Example 7 with a polymeric binder content of more than 3% by weight.

### Comparative Example 8: Composite positive electrode with nitrile-butadiene rubber and all-solid-state battery comprising same

A slurry was prepared by mixing LiNi_{0.9}Co_{0.05}Mn_{0.05}O₂, Li₆PS₅Cl (LPSCI) powder, Super C, and nitrile-butadiene rubber (Kumho Petro Chemical) in butyl butyrate solvent. The slurry was mixed with a Thinky Mixer (Thinky) for 15 minutes, and an aluminum current collector was casted with a doctor blade to prepare a composite positive electrode. The weight ratio of positive electrode active material, solid electrolyte, conductive material, and binder in the prepared composite positive electrode is 75 : 21.5 : 1.5 : 2. The prepared composite positive electrode was prepared with a loading of 15 mg/cm² of active material per area.

Li₆PS₅Cl pellet was prepared by placing 100 mg of Li₆PS₅Cl powder into a PET mold and pressurizing it at room temperature at a pressure of 300 MPa, and then the composite positive electrode prepared above was added and pressurized at a pressure of 430 MPa. Li-In foil was placed on the opposite side of the Li₆PS₅Cl pellet and clamped at a pressure of 60 MPa to produce an all-solid-state battery.

### Experimental Example 4: Evaluating the chemical stability of composite positive electrode with EMG ternary copolymer binder

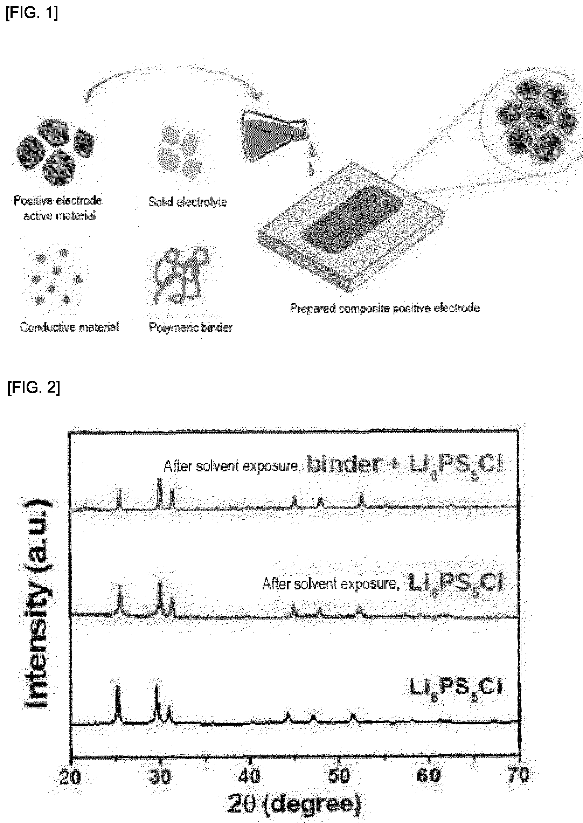

To evaluate the chemical stability of the composite positive electrode prepared in Example 1, an XRD evaluation was performed, the results of which are shown in FIG. 2.

The side reactions of the butyl butyrate solvent and EMG ternary copolymer binder used in the manufacturing of the composite positive electrode were tested for side reactions, as described below.

First, a solution was prepared by adding butyl butyrate solvent to LPSCI solid electrolyte and reacting for 24 hours, and a solution was prepared by mixing LPSCI solid electrolyte with EMG ternary copolymer binder solution and reacting for 24 hours. After drying the solutions in a vacuum oven, the residual material was subjected to XRD evaluation, which confirmed that the structural stability of the LPSCI solid electrolyte was well maintained in all compositions, as shown in FIG. 2.

### Experimental Example 5: Mechanical property evaluation of composite positive electrode with EMG ternary copolymer binder (Nano Indenter) - Hardness measurement

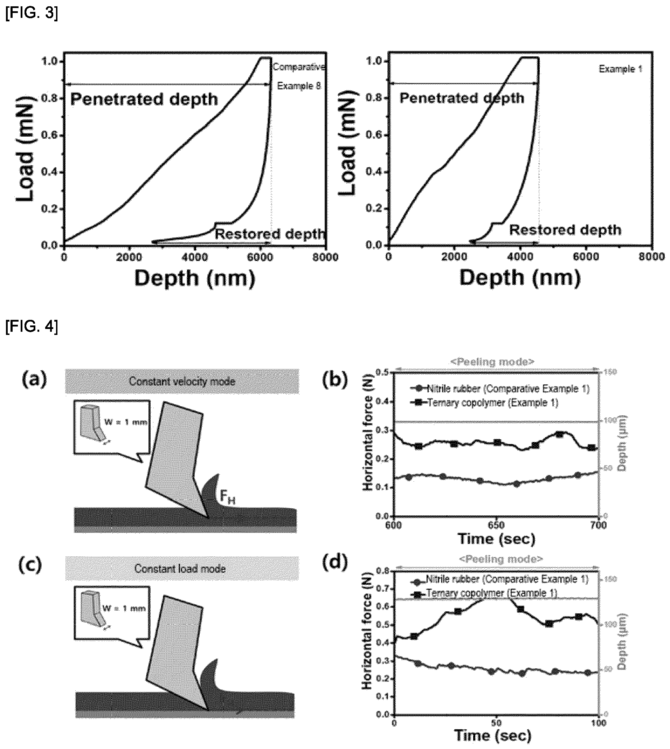

The hardness of the composite positive electrodes according to Example 1 and Comparative Example 8 was measured. This was evaluated using a Nano Indentation machine and the results are shown in FIG. 3 below.

Specifically, the hardness was measured by indenting the electrode specimen with a Vickers Indenter (having a tip width of 0.5 µm) using a nanoindenter (Anton Paar, NHT3). Specifically, the indenter was loaded onto the electrode specimen at a rate of 0.1 mN/s for 10 seconds to apply a force of up to 1 mN, it was allowed to creep for 10 seconds, followed by unloading the indenter at a rate of 0.1 mN/s for 10 seconds, and the resulting indentation hardness was measured.

This hardness measurements showed that the composite positive electrode of Example 1 had a smaller penetration depth compared to the composite positive electrode of Comparative Example 1. Table 3 below shows the results of the hardness of the composite positive electrodes.

**[Table 3]**

| | **Example 1** | **Comparative Example 8** |
|---|---|---|
| **Hardness (GPa)** | 0.0025 | 0.0012 |

As shown in Table 3 above, the composite positive electrode of Example 1 comprising the EMG ternary copolymer has a greater hardness than the composite positive electrode of Comparative Example 8.

### Experimental Example 6: Evaluation of mechanical properties of composite positive electrode with EMG ternary copolymer binder (SAICAS) - Interfacial adhesion measurements

The interfacial adhesion of the composite positive electrodes according to Example 1 and Comparative Example 8 was measured. This was evaluated using a Surface and Interfacial Cutting Analysis System (SAICAS) machine and the results are shown in FIG. 4 below.

Specifically, the interfacial adhesion was measured using SAICAS equipment (SAICAS EN-EX (Daipla Wintes, Japan)). While inclined cutting the positive electrode in the depth direction with a diamond microblade, the horizontal force was measured by the force on the blade, and the horizontal force is a measure of the force applied horizontally to the microblade to maintain a constant cutting speed.

In the composite positive electrode according to Example 1 and Comparative Example 8, the internal adhesion between the composite positive electrode materials was measured by constant velocity mode, and the interfacial adhesion between the composite positive electrode and the current collector was measured by constant load mode (Rake angle: 20°, Clearance angle: 10°). FIGs. 4(a) and 4(b) are diagrams illustrating the internal adhesion between the composite positive electrode materials, and FIGs. 4(c) and 4(d) are diagrams illustrating the interfacial adhesion between the composite positive electrode and the current collector.

The larger the value of horizontal force required to maintain the set cutting speed, the harder the material is and the more difficult it is to cut, that is, the material has superior binding force. Accordingly, it was found that the composite positive electrode according to Example 1 has superior adhesion at the interface and internally compared to the composite positive electrode according to Comparative Example 8.

### Experimental Example 7: Mechanical property evaluation of composite positive electrode with EMG ternary copolymer binder (Nano scratch) - Hardness measurement

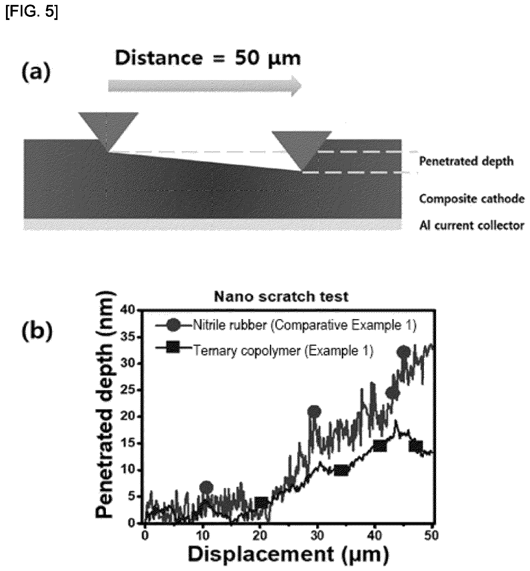

The hardness of the composite positive electrodes according to Example 1 and Comparative Example 8 was measured. This was evaluated using a nano scratch instrument and the results are shown in FIG. 5 below.

Specifically, the hardness was measured using a nano scratch instrument (Anton Paar). In a preliminary procedure, the depth of penetration of the blade into the positive electrode was measured by moving the blade a distance of approximately 50 µm within the electrode while maintaining a constant speed in the horizontal direction and a constant load in the vertical direction (Scanning velocity = 10 µm/s, Scratch load = 200 mN). FIG. 5(a) is a schematic illustration of a nano scratch.

When the same load value is set, the harder material results in a smaller penetration depth of the blade, and it was confirmed that the composite positive electrode according to Example 1 exhibited a shallower penetration depth compared to the composite positive electrode according to Comparative Example 8. FIG. 5(b) shows a plot of the measured results of the penetration depth. This confirms that the composite positive electrode according to Example 1 has a better hardness than the composite positive electrode according to Comparative Example 8.

### Experimental Example 8: Surface activation measurement of composite positive electrode active material with EMG ternary copolymer binder

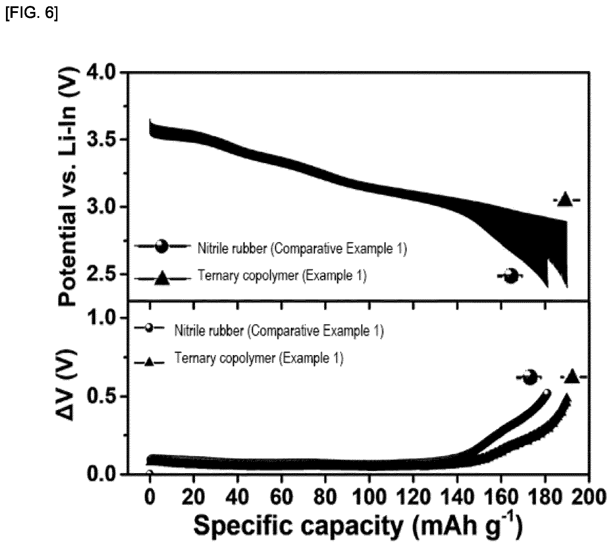

The surface activation of the positive electrode active material distributed within the composite positive electrode according to Example 1 and Comparative Example 8 was compared. The results of the Galvanostatic Intermittent Titration Technique (GITT) analysis are shown in FIG. 6 below.

The all-solid-state battery according to Example 1 and Comparative Example 8 was prepared by charging and discharging at a current rate of 0.05 C, and then prepared in the charged state at a current rate of 0.05 C. 0.2 C current was then applied for 1 minute, followed by 2 hours of rest to compare the surface activation of the positive electrode active material.

Lower polarization was observed in the all-solid-state battery according to Example 1 than in the all-solid-state battery according to Comparative Example 8, and the final discharge capacity was 181.0 mAh/g in Comparative Example 8 and 189.8 mAh/g in Example 1, confirming that the surface activation of the positive electrode active material is better in Example 1.

### Experimental Example 9: Ion conductivity measurement of composite solid electrolyte with EMG ternary copolymer binder

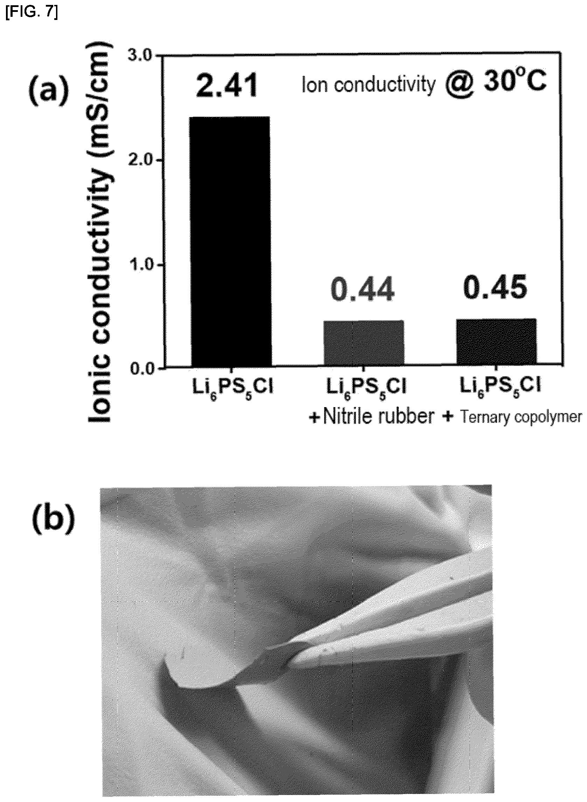

The ionic conductivity of the composite solid electrolyte applied to the all-solid-state batteries according to Example 1 and Comparative Example 8 was measured. Solid electrolyte sheets were prepared by mixing LPSCI solid electrolyte and binder in a 95:5 weight ratio. FIG. 7(b) is a diagram illustrating a solid electrolyte sheet prepared as described above.

LPSCI alone had an ionic conductivity of 2.41 mS/cm, while the composition with binder had similar values of 0.44 mS/cm in case of including nitrile rubber and 0.45 mS/cm in case of including EMG ternary copolymer. FIG. 7(a) is a diagram illustrating the ionic conductivity of a composite solid electrolyte applied to all-solid-state batteries according to Comparative Example 8 and Example 1. This confirmed that EMG ternary copolymer binder exhibited similar properties to a nitrile rubber binder in terms of ionic conductivity.

### Experimental Example 10: Evaluation of cycle life characteristics of composite positive electrode-based all-solid-state batteries with different content of EMG ternary copolymer binder

Prior to the evaluation of the all-solid-state batteries prepared in Examples 1 to 3, the optimal binder composition was found by varying the content of EMG ternary copolymer.

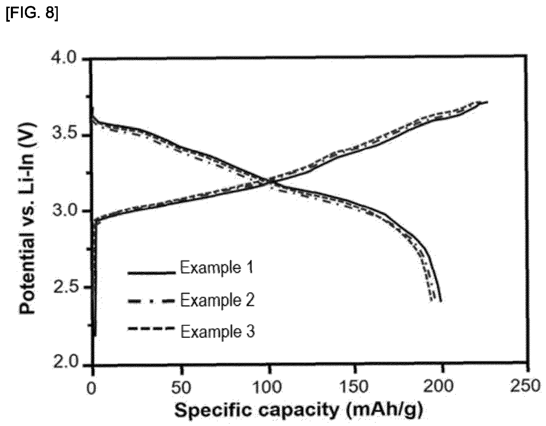

FIG. 8 is a charge-discharge curve of a formation cycle obtained by charging and discharging at a current rate of 0.05 C. Table 4 below shows the discharge capacity based on the positive electrode active material of all-solid-state battery containing 1, 2 and 3% by weight EMG ternary copolymer binder.

**[Table 4]**

| | **Example 1** | **Example 2** | **Example 3** |
|---|---|---|---|
| **Discharge capacity (mAh/g)** | 199.1 | 196.8 | 194.6 |

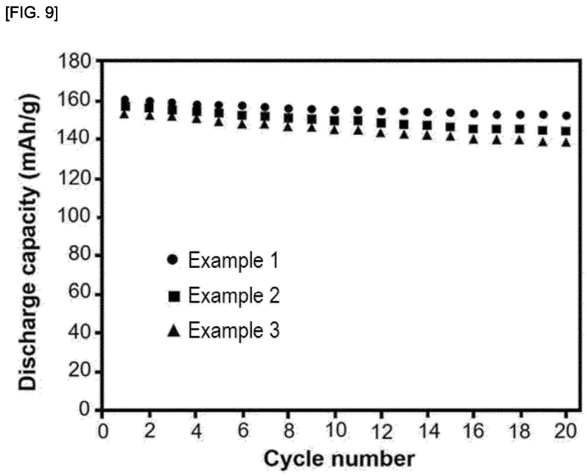

The discharge capacity according to the cycle, obtained by charging and discharging at a current rate of 0.2 C after two formation cycles is shown in FIG. 9. Table 5 below shows the initial discharge capacity at 0.2 C current rate and the capacity retention at 20 cycles.

**[Table 5]**

| | **Example 1** | **Example 2** | **Example 3** |
|---|---|---|---|
| **Discharge capacity (mAh/g)** | 158.9 | 155.3 | 153.5 |
| **Capacity retention (%)** | 95.6 | 92.6 | 90.1 |

As shown in Table 5 above, the all-solid-state battery of Example 1 with 2% by weight EMG ternary copolymer binder exhibited the best cycle characteristics. Therefore, it can be seen that the optimal content of the EMG ternary copolymer binder is 2% by weight.

### Experimental Example 11: Evaluation of cycle life characteristics and high rate characteristics of composite positive electrode-based all-solid-state batteries with EMG ternary copolymer binder

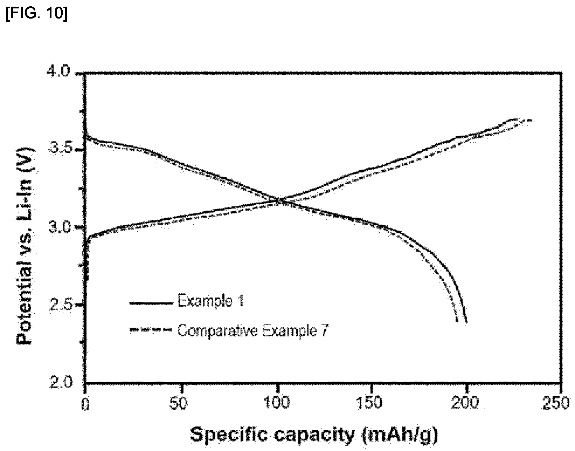

FIG. 10 is a charge-discharge curve of a formation cycle obtained by charging and discharging the all-solid-state batteries prepared in Comparative Example 8 and Example 1 at a current rate of 0.05 C. The all-solid-state batteries of Comparative Example 8 and Example 1 exhibited discharge capacities based on the positive electrode active material as shown in Table 6 below.

**[Table 6]**

| | **Example 1** | **Comparative Example 8** |
|---|---|---|
| **Discharge capacity (mAh/g)** | 199.1 | 196.0 |

As shown in Table 6 above, it can be seen that the all-solid-state battery of Example 1 has a higher initial capacity compared to the all-solid-state battery of Comparative Example 8.Table 7 below shows the efficiency (discharge capacity / charge capacity x 100%) for the initial formation cycle.

**[Table 7]**

| | **Example 1** | **Comparative Example 8** |
|---|---|---|
| **Efficiency (%)** | 87.4 | 83.1 |

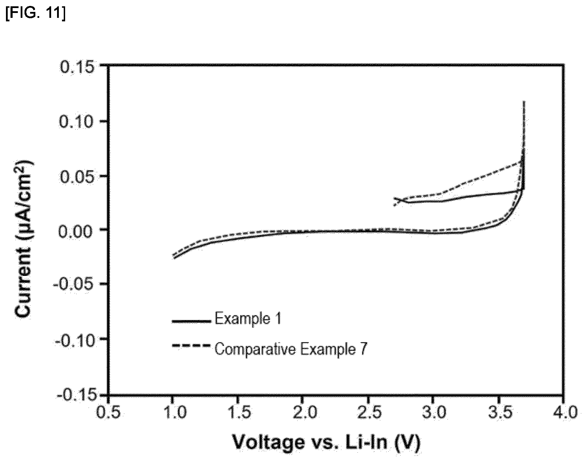

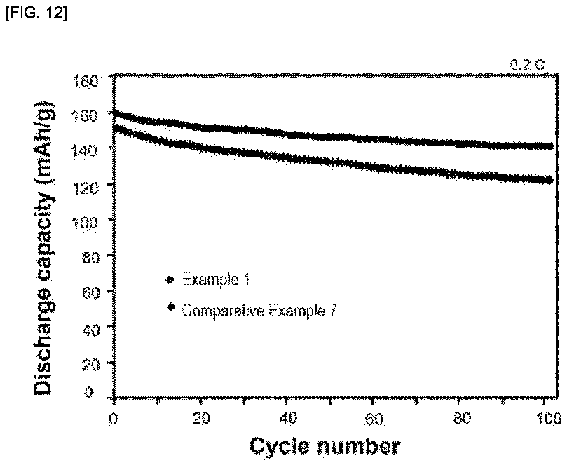

To verify this efficiency, a cyclic voltammetry (CV) analysis was performed, and the results are shown in FIG. 11. The nitrile rubber and EMG ternary copolymer electrolyte sheet used in the analysis is the solid electrolyte sheet with a binder weight ratio of 5% by weight applied in Experimental Example 9. The voltage ranged from 1.0 to 3.7 V (vs. Li-In) and was evaluated using a scan rate of 0.5 mV/s. The observation of more side reactions in Comparative Example 8 during the initial voltage increase may explain the efficiency difference in the early formation cycle of the battery life assessment. The discharge capacity according to the cycle, obtained by charging and discharging at a current rate of 0.2 C after two formation cycles is shown in FIG. 12. The initial discharge capacities and capacity retention rates of the all-solid-state batteries of Comparative Example 8 and Example 1 at a current rate of 0.2 C are shown in Table 8.

**[Table 8]**

| | **Example 1** | **Comparative Example 8** |
|---|---|---|
| **Discharge capacity (mAh/g)** | 158.9 | 150.7 |
| **Capacity retention (%)** | 88.5 | 81.3 |

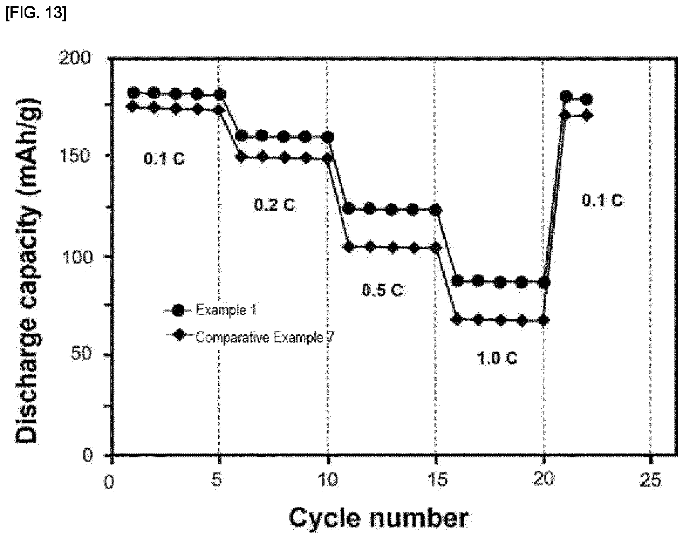

As shown in Table 8 above, it can be seen that the all-solid-state battery of Example 1 with the EMG ternary copolymer binder exhibits better cycle characteristics. The discharge capacities of the all-solid-state batteries prepared in Comparative Example 8 and Example 1 according to the current rate change are shown in FIG. 13. At a current rate of 1.0 C, the discharge capacity is shown in Table 9 below.

**[Table 9]**

| | **Example 1** | **Comparative Example 8** |
|---|---|---|
| **Discharge capacity (mAh/g)** | 87.4 | 68.4 |

As shown in Table 9 above, the all-solid-state battery of Example 1 exhibits better high rate characteristics than Comparative Example 8.

### Experimental Example 12: Cross-sectional image analysis of composite positive electrode with EMG ternary copolymer binder

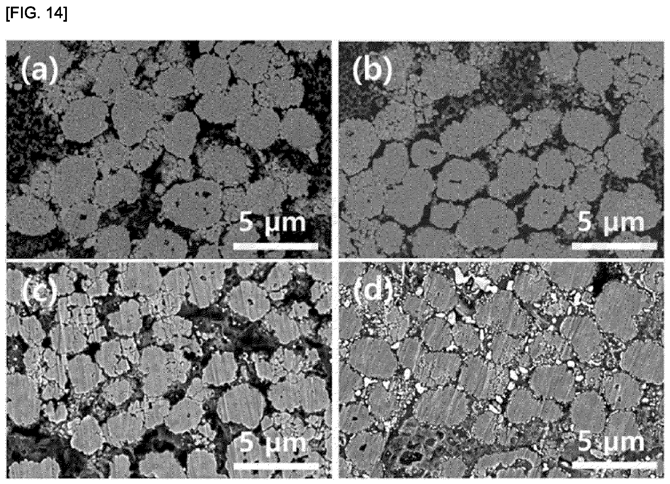

Field Emission Scanning Electron Microscopy (FE-SEM, Hitachi) analysis of the composite positive electrode cross-sections was performed to compare the pre- and post-cycle cross-sections of the composite positive electrodes for all-solid-state batteries according to the type of polymeric binder applied, and the results are shown in FIG. 14.

FIG. 14(a) is an image depicting a pre-cycle cross-section of a composite positive electrode for an all-solid-state battery prepared from Comparative Example 8, and FIG. 14(b) is an image depicting a pre-cycle cross-section of a composite positive electrode for an all-solid-state battery prepared from Example 1. In the pre-cycle cross-section, the absence of cracks in the positive electrode active material is observed for both the nitrile rubber binder application in Comparative Example 8 and the EMG ternary copolymer binder application in Example 1.

FIG. 14(c) is an image showing a cross-sectional view after 100 cycles of a composite positive electrode for an all-solid-state battery prepared from Comparative Example 8, and FIG. 14(d) is an image showing a cross-sectional view after 100 cycles of a composite positive electrode for an all-solid-state battery prepared from Example 1. After 100 cycles of evaluation, it was found that the active material cracks are numerous in Comparative Example 8, while the active material morphology is generally well preserved in Example 1, and the interface between the active material and the solid electrolyte remains stable.

## Claims

1. A composite positive electrode comprising a positive electrode active material, a conductive material, a solid electrolyte, and a polymeric binder,
wherein the polymeric binder is a ternary copolymer comprising ethylene-derived repeating units, methylacrylate-derived repeating units, and glycidylmethacrylate-derived repeating units.

2. The composite positive electrode according to claim 1,
wherein the polymeric binder is a ternary copolymer comprising repeating units represented by Formula 1 below, repeating units represented by Formula 2 below, and repeating units represented by Formula 3 below: 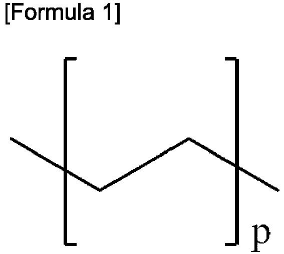 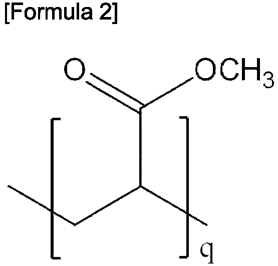 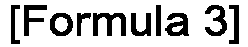 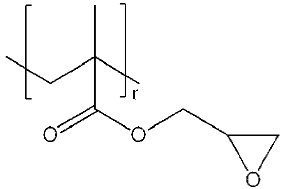 in Formulae 1 to 3,
p, q, and r are the number of moles in the repeat unit, respectively, and
p, q, and r are each independently integers between 1 and 100.

3. The composite positive electrode according to claim 2,
wherein the polymeric binder is a polymer comprising cross-repeating units represented by Formula 4 below: 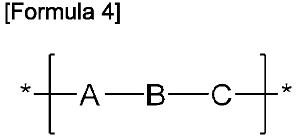
wherein A is the repeating unit represented by Formula 1 above, B is the repeating unit represented by Formula 2 above, and C is the repeating unit represented by Formula 3 above

4. The composite positive electrode according to claim 3,
wherein, in formula 4, for 1 mole of r, p:q is in a molar ratio of 30 to 50 : 1 to 5.

5. The composite positive electrode according to claim 3,
wherein p:q:r is 40:4:1.

6. The composite positive electrode according to claim 1,
wherein the content of the polymeric binder is 3% by weight or less based on the total weight of the composite positive electrode.

7. The composite positive electrode according to claim 1,
wherein the positive electrode active material comprises a lithium transition metal complex oxide,
wherein the transition metal comprises at least one of Co, Mn, Ni, and Al.

8. The composite positive electrode according to claim 7,
wherein the lithium transition metal complex oxide comprises at least one of the compounds represented by Formula 5 below:
[Formula 5] LiₓNiₐCo_{b}Mn_{c}M_{z}O_{y}
wherein 0.5≤x≤1.5, 0≤a≤1, 0≤b<1, 0≤c<1, 0≤z<1, 1.5<y<5, wherein a+b+c+z is less than or equal to 1, and M comprises at least one selected from Al.

9. The composite positive electrode according to claim 1,
wherein the solid electrolyte is a sulfide-based solid electrolyte.

10. The composite positive electrode according to claim 9,
wherein the sulfide-based solid electrolyte comprises at least one selected from the group consisting of LiₐPS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS.

11. An all-solid-state battery comprising a composite positive electrode according to any one of claims 1 to 10;
a negative electrode; and
a solid electrolyte interposed between them.
